# DEMANDE DE BREVET EUROPEEN

(11) **EP 4 641 012 A1**
(43) Date de publication de la demande: **29.10.2025**
(21) Numéro de dépôt: 25171536.3
(22) Date de dépôt: 21.04.2025
(51) Int. Cl.: F03D 9/00, F03D 9/10, F03D 9/11, F03D 13/25

(54) **INSTALLATION DE CONVERSION D'ENERGIE EN MER**

(30) Priorité: 23.04.2024 FR 2404176
(71) Demandeur: TotalEnergies OneTech, 92400 Courbevoie (FR)
(72) Inventeur: Ahmedi, Arsim, 92400 Courbevoie (FR)
(74) Mandataire: Bandpay & Greuter

(57) **Abrégé**

La présente divulgation concerne une installation de production d'énergie en mer (100) comprenant une plateforme flottante (110), un système de production d'énergie monté sur la plateforme et comprenant préférentiellement au moins une éolienne (120), une amarre (130, 140) reliée à la plateforme, et un système de génération et/ou stockage d'énergie (G2, G1), par exemple électrique, à partir d'une tension mécanique subie par l'amarre.

Cela constitue une installation de production d' énergie en mer améliorée.

## Description

### Domaine technique

La présente divulgation concerne une installation de production d'énergie en mer (« offshore » en anglais) comprenant une plateforme flottante et un système de production d'énergie monté sur la plateforme, le système de production d'énergie comprenant préférentiellement au moins une éolienne.

### Arrière-plan

Les éoliennes en mer sont des systèmes de production d'énergie montés sur des plateformes flottantes et sont généralement assemblés au sein d'ensembles dits « parcs éoliens ». La fonction première de ces éoliennes est de produire de l'énergie, en particulier de l'électricité, grâce à la présence d'un vent d'une force suffisamment élevée.

Il est connu que les parcs éoliens comprennent des systèmes auxiliaires qui ont besoin d'être alimentés en énergie pour pouvoir fonctionner. L'alimentation de ces systèmes peut être assurée grâce à l'électricité produite par les éoliennes elles-mêmes. Un problème se pose toutefois en cas d'absence de vent ou de présence d'un vent trop faible, entraînant un arrêt de fonctionnement des éoliennes du parc.

Il est également connu que les variations en termes de force du vent peuvent se traduire en des variations importantes de puissance électrique produite par le parc éolien. Il existe alors un besoin de lisser ces variations de puissance.

Enfin, le parc peut connaître des pannes et/ou des transitoires inattendus, entraînant un besoin de suppléer à l'énergie produite par les éoliennes.

On recherche en ce sens une installation de production d'énergie en mer améliorée.

### Résumé

On propose ainsi une installation de production d'énergie en mer comprenant une plateforme flottante, un système de production d'énergie monté sur la plateforme et comprenant préférentiellement au moins une éolienne, une amarre reliée à la plateforme, et un système de génération et/ou stockage d'énergie, par exemple électrique, à partir d'une tension mécanique subie par l'amarre.

Selon un mode de réalisation, l'installation comprend en outre une plateforme flottante supplémentaire et un système supplémentaire de production d'énergie monté sur la plateforme supplémentaire et comprenant préférentiellement au moins une éolienne, l'amarre reliant la plateforme et la plateforme supplémentaire.

Selon un autre mode de réalisation, l'installation comprend en outre une ancre de fixation au fond marin, l'amarre reliant la plateforme et l'ancre de fixation. Selon un exemple de ce mode de réalisation, l'installation peut comprendre en outre une plateforme flottante supplémentaire, un système supplémentaire de production d'énergie monté sur la plateforme supplémentaire et comprenant préférentiellement au moins une éolienne, et une amarre additionnelle, l'amarre additionnelle reliant la plateforme et la plateforme supplémentaire. Dans cet exemple, l'installation peut optionnellement comprendre en outre un système additionnel de génération et/ou stockage d'énergie, par exemple électrique, le système additionnel de génération et/ou stockage d'énergie étant configuré pour générer et/ou stocker l'énergie à partir d'une tension mécanique subie par l'amarre additionnelle, et/ou une amarre supplémentaire reliant la plateforme supplémentaire à l'ancre de fixation, l'installation comprenant de préférence en outre un système supplémentaire de génération et/ou stockage d'énergie, par exemple électrique, à partir d'une tension mécanique subie par l'amarre supplémentaire.

Dans l'un ou l'autre mode de réalisation, l'installation peut optionnellement comprendre en outre comprenant une ou plusieurs amarres de fixation reliant chacune, à une ancre additionnelle de fixation au fond marin respective, l'amarre ou l'amarre additionnelle reliant la plateforme et la plateforme supplémentaire, de préférence deux amarres de fixation connectées de part et d'autre du système ou système additionnel de génération et/ou stockage d'énergie.

Dans des exemples, le ou au moins un système de génération et/ou stockage d'énergie comprend un convertisseur d'énergie cinétique en énergie électrique, par exemple un générateur électrique tournant ou un générateur électrique à mouvement linéaire, optionnellement couplé à au moins une batterie, et/ou un volant d'inertie.

Dans des exemples, le ou au moins un système de génération et/ou stockage d'énergie comprend deux parties mobiles l'une par rapport à l'autre, et l'une des deux parties mobiles est connectée à une extrémité d'amarre, ou l'une des deux parties mobiles est connectée à une extrémité intérieure de section d'amarre et l'autre partie mobile est connectée à une extrémité intérieure correspondante d'amarre.

Dans des exemples, un rapport entre une puissance de sortie du système de génération et/ou stockage d'énergie et une puissance de sortie du système de production d'énergie est inférieur à 0.05.

Dans des exemples, l'installation comprend en outre un ou plusieurs systèmes auxiliaires adaptés à être alimentés en énergie par le système de génération et/ou stockage d'énergie, les un ou plusieurs systèmes auxiliaires comprenant optionnellement un système d'alarme, un système de signalisation, et/ou un système de contrôle et d'acquisition de données.

On propose également un procédé d'utilisation d'une telle installation. Dans des exemples, le procédé d'utilisation peut comprendre une production d'énergie par le système de production d'énergie monté sur la plateforme, de préférence de l'énergie électrique issue d'une conversion d'une énergie cinétique fournie par du vent. L'utilisation peut par ailleurs comprendre une mise sous tension mécanique de l'amarre, et une génération et/ou un stockage d'énergie, par exemple électrique, par le système de génération et/ou stockage, à partir d'une tension mécanique subie par l'amarre. La génération et/ou stockage d'énergie par le système de génération et/ou stockage peut survenir au moins partiellement simultanément à la production d'énergie par le système de production d'énergie monté sur la plateforme.

On propose également un procédé de stabilisation dynamique d'une telle installation, dans lequel le système de génération et/ou stockage d'énergie ajuste la tension ou la variation de tension de l'amarre à laquelle il est connecté.

On propose également un procédé de stabilisation dynamique d'une telle installation, dans lequel le système de génération et/ou stockage d'énergie ajuste la tension ou la variation de tension de l'amarre à laquelle il est connecté lorsque le système de production d'énergie est en fonctionnement, ou n'ajuste pas la tension ou variation de tension de l'amarre à laquelle il est connecté lorsque le système de production d'énergie est à l'arrêt.

### Brève description des figures

La solution proposée va maintenant être détaillée, en référence aux figures suivantes qui en illustrent certains aspects de manière non limitative :
La figure 1 montre un premier exemple d'installation.
La figure 2 montre un deuxième exemple d'installation.
La figure 3 montre un troisième exemple d'installation.
La figure 4 montre une vue en coupe longitudinale d'un exemple de système de génération et/ou stockage d'énergie, dans un premier état.
La figure 5 montre une vue en coupe longitudinale de l'exemple de système de génération et/ou stockage d'énergie de la figure 4, dans un deuxième état.
La figure 6 montre une vue en coupe transversale de l'exemple de système de génération et/ou stockage d'énergie de la figure 4, dans le deuxième état ; selon l'axe AA illustré sur la figure 5.

### Description détaillée

L'installation de production d'énergie en mer proposée comprend une plateforme flottante, un système de production d'énergie monté sur la plateforme, une amarre reliée à la plateforme, et un système de génération et/ou stockage d'énergie à partir d'une tension mécanique subie par l'amarre. Le système de production d'énergie monté sur la plateforme peut comprendre de préférence au moins une éolienne. Le système de génération et/ou stockage d'énergie peut par exemple générer et/ou stocker de l'énergie électrique.

Une telle solution fournit une installation de production d'énergie en mer améliorée.

En effet, la solution tire avantage de la présence d'une plateforme flottante pour convertir une énergie cinétique liée à la flottaison en une énergie, par exemple électrique, générée et/ou stockée par un système dédié de génération et/ou stockage d'énergie. Cette conversion est réalisée par la présence d'une amarre reliée à la plateforme. L'installation est configurée pour que l'amarre puisse subir, au moins à certains moments, une tension mécanique liée aux courants marins et/ou aux oscillations de la plateforme causées par les vagues et/ou le vent. Le système de génération et/ou stockage est quant à lui configuré pour générer et/ou stocker de l'énergie, à partir de cette tension mécanique. L'installation de production d'énergie en mer est ainsi configurée pour produire de l'énergie primaire, par exemple électrique, par un système de production d'énergie primaire, par exemple au moins une éolienne qui convertit l'énergie cinétique du vent. De plus, l'installation de production d'énergie en mer est également configurée pour produire de l'énergie secondaire, par exemple électrique, grâce à un système secondaire qui convertit une énergie issue d'une tension mécanique dans une amarre et provenant indirectement des courants marins.

L'installation peut comprendre un ou plusieurs systèmes auxiliaires adaptés à être alimentés en énergie par le système de génération et/ou stockage d'énergie. Le système de génération et/ou stockage d'énergie peut ainsi alimenter en énergie les systèmes auxiliaires, même en cas de non-fonctionnement ou de dysfonctionnement de l'éolienne. Un tel non-fonctionnement ou dysfonctionnement peut par exemple être lié à une absence de vent ou à la présence d'un vent trop faible, ou encore à une panne ou à un arrêt transitoire. Les un ou plusieurs systèmes auxiliaires peuvent notamment comprendre un système d'alarme, un système de signalisation, et/ou un système de contrôle et d'acquisition de données (connu sous le sigle SCADA, acronyme de l'anglais « Supervisory Control And Data Acquisition »). De tels systèmes réalisent des fonctions qui peuvent être critiques, et le système de génération et/ou stockage d'énergie permet de prévenir ou réduire les arrêts de fonctionnement inopinés.

De manière additionnelle ou alternative, le système de génération et/ou stockage d'énergie peut suppléer à une production trop faible ou inexistante d'énergie, par exemple électrique, par l'éolienne, par exemple en cas d'absence de vent ou de présence d'un vent trop faible, ou encore d'une panne ou d'un arrêt transitoire.

De manière additionnelle ou alternative, le système de génération et/ou stockage d'énergie peut servir à lisser des variations de puissance, par exemple électrique, produite par l'installation. Le système de génération et/ou stockage d'énergie permet ainsi d'atténuer les effets des variations importantes de vitesse du vent sur la production d'électricité.

Selon un mode de réalisation avantageux, le système de génération et/ou stockage d'énergie peut servir à contrôler de manière dynamique la stabilité de la plateforme en ajustant la tension ou la variation de tension de l'amarre ou ligne d'ancrage à laquelle il est connecté. Dans ce cas, le système de génération et/ou stockage d'énergie consomme de l'énergie pour réaliser le contrôle dynamique de la plateforme. Ce mode de réalisation est particulièrement utile lorsque la plateforme comporte une turbine éolienne en fonctionnement, car il permet d'accroître la productivité électrique de la turbine en permettant une plage étendue de fonctionnement et/ou d'accroitre la durée de vie de la turbine en minimisant les besoins de maintenance et l'usure des composants mécaniques.

Un rapport entre une puissance de sortie du système de génération et/ou stockage d'énergie relativement à une puissance de sortie du système de production d'énergie (e.g., une éolienne montée sur la plateforme) peut être inférieur à 0.05 (5%). Ainsi, le système de génération et/ou stockage d'énergie est configuré pour générer une énergie, e.g. électrique, seulement secondaire car bien moindre que l'énergie produite par l'au moins une éolienne, puisque selon un tel rapport. Le système de génération et/ou stockage d'énergie est donc peu encombrant et peu coûteux à mettre en œuvre. Par exemple, le système primaire de production d'énergie (e.g. l'éolienne) peut présenter une puissance de sortie de l'ordre de 15MW (mégawatts), et/ou le système secondaire que forme le système de génération et/ou stockage d'énergie peut présenter une puissance de sortie inférieure à 1MW, de préférence inférieure à 0.5MW.

L'installation peut comprendre plusieurs plateformes flottantes ayant chacune un système de production d'énergie monté sur la plateforme, par exemple une éolienne. L'installation peut ainsi former un parc éolien. L'installation peut alors comprendre plusieurs plateformes chacune reliée à une amarre, et plusieurs systèmes de génération et/ou stockage d'énergie, par exemple électrique, à partir chacun d'une tension mécanique subie par une amarre respective.

Par « amarre » on entend un cordage ou câblage ayant au moins deux extrémités et adapté à maintenir une plateforme flottante, comprenant par exemple au moins une éolienne. De telles amarres sont connues dans le domaine des parcs éoliens en mer. Toute amarre de la présente divulgation peut présenter un diamètre de section transversale supérieur à 10 centimètres et/ou inférieur à 50 cm, par exemple de l'ordre de 30 centimètres (i.e., 30 centimètres à plus ou moins 10%). Toute amarre de la présente divulgation peut être réalisé en un matériau polymère, par exemple du polyéthylène haute résistance à la traction et/ou du tissu composite de type fibre cubique ou Dyneema (marque déposée). La plateforme flottante peut présenter une masse supérieure à 1000 tonnes, par exemple supérieure à 5000 tonnes. Toute amarre de la présente divulgation peut être adaptée à subir sans casser une tension supérieure à 100 tonnes, par exemple supérieure à 500 tonnes.

Toute amarre de la présente divulgation peut comprendre plusieurs sections d'amarre reliées entre elles deux-à-deux par des extrémités respectives, dites « extrémité intérieure de section d'amarre ». Outre une telle extrémité intérieure, une section d'amarre peut présenter une extrémité formant une extrémité d'amarre, selon que la section d'amarre est une section extrêmale de l'amarre ou non.

L'amarre reliée à la plateforme flottante peut présenter une extrémité d'amarre fixée à la plateforme. L'amarre peut en outre être reliée à un objet séparé de la plateforme. L'amarre peut pour cela comprendre une autre extrémité d'amarre fixée à cet objet séparé de la plateforme. Ainsi, l'amarre peut subir une tension mécanique due aux mouvements relatifs entre la plateforme flottante et cet objet séparé de la plateforme, lesdits mouvements relatifs étant liés par exemple aux courants marins. L'amarre peut être configurée pour autoriser une distance de séparation entre la plateforme et l'objet séparé de la plateforme supérieure à 10 mètres, par exemple supérieure à 100 mètres voire 500 mètres, tout en continuant de relier la plateforme et l'objet séparé de la plateforme.

Tout système de génération et/ou stockage d'énergie de la présente divulgation peut comprendre deux parties mobiles l'une par rapport à l'autre. Tout système de génération et/ou stockage d'énergie de la présente divulgation peut comprendre un mécanisme configuré pour transformer une énergie cinétique en une autre énergie, par exemple électrique, et en particulier pour générer ladite autre énergie à partir d'un mouvement des deux parties mobiles l'une par rapport à l'autre. Le système de génération et/ou stockage d'énergie peut par exemple comprendre un ou plusieurs aimants permanents montés sur l'une des deux parties mobiles, et une ou plusieurs bobines montées sur l'autre partie mobile. Une telle configuration est simple à mettre en œuvre. Le système de génération et/ou stockage d'énergie peut réaliser la conversion d'énergie par toute autre configuration alternative.

Tout système de génération et/ou stockage d'énergie de la présente divulgation peut être arrangé pour que les deux parties mobiles l'une par rapport à l'autre soient mises en mouvement l'une par rapport à l'autre lorsqu'une amarre reliée subit une tension mécanique. Cette énergie cinétique est convertie en une autre énergie, par exemple électrique.

Le mouvement des deux parties mobiles l'une par rapport à l'autre peut être quelconque, par exemple rotatif (i.e., l'une des deux parties mobiles tournant par rapport à l'autre) ou linéaire (i.e. l'une des deux parties mobiles étant en translation par rapport à l'autre).

Dans le cas d'un mouvement linéaire, le système de génération et/ou stockage d'énergie peut comprendre un limiteur de course. Le limiteur de course impose une limite au mouvement linéaire relatif entre les deux parties mobiles, évitant ainsi une élongation trop importante du système.

Tout système de génération et/ou stockage d'énergie de la présente divulgation peut comprendre un mécanisme à cliquet, et/ou un système à ressort. De tels moyens permettent que lorsque l'amarre subit des tensions mécaniques successives, les deux parties mobiles entrent bien à chaque fois en mouvement l'une par rapport à l'autre et génèrent ainsi de l'énergie.

Le système de génération et/ou stockage d'énergie peut présenter un premier état « actionnable » dans lequel les deux parties mobiles peuvent être mises en mouvement l'une par rapport à l'autre si l'amarre respective subit une tension mécanique, et un deuxième état « actionné » dans lequel les deux parties mobiles viennent d'avoir été mise en mouvement l'une par rapport à l'autre. Le mécanisme à cliquet et/ou le système à ressort sont configurés pour faire passer automatiquement le système de génération et/ou stockage d'énergie depuis le deuxième état vers le premier état, de sorte que le mouvement relatif entre les deux parties mobiles puisse être de nouveau actionné.

Par exemple, dans le cas d'un mouvement linéaire, le système de génération et/ou stockage d'énergie peut comprendre un ressort de compression (ou respectivement de traction) arrangé de sorte qu'une tension mécanique subie par l'amarre respective mette les deux parties mobiles en translation relative et étire (respectivement compresse) le ressort. Par exemple, une extrémité du ressort peut être solidaire d'une partie mobile et l'autre extrémité du ressort est solidaire de l'autre partie mobile. Lorsque l'amarre ne subit plus la tension mécanique, le ressort entre en compression (respectivement décompression) pour retourner à son état de repos. Les deux parties mobiles retournent ainsi à leur position relative initiale, et sont de nouveau aptes à être mises en translation relative par une mise sous tension subséquente de l'amarre.

De manière similaire, dans le cas d'un mouvement rotatif, le système de génération et/ou stockage d'énergie peut comprendre un ressort et un mécanisme à cliquet coopérant pour actionner la rotation relative des deux parties mobiles lorsque l'amarre subit une tension mécanique. Le ressort et le mécanisme à cliquet coopèrent également pour que le ressort puisse retourner à son état de repos, de sorte que lorsque l'amarre ne subit plus de tension mécanique, le système de génération et/ou stockage d'énergie se retrouve dans son état actionnable. Une telle coopération entre ressort et mécanisme à cliquet est connue par exemple dans les lanceurs manuels de moteurs, par exemple les lanceurs de tondeuses.

Tout système de génération et/ou stockage d'énergie de la présente divulgation peut comprendre un convertisseur d'énergie cinétique en énergie électrique, par exemple un générateur électrique tournant ou un générateur électrique à mouvement linéaire. De manière additionnelle ou alternative, tout système de génération et/ou stockage d'énergie de la présente divulgation peut comprendre un volant d'inertie. De tels systèmes de génération et/ou stockage d'énergie sont simples à mettre en œuvre et offrent un niveau de résistance adapté au milieu marin.

Tout système de génération et/ou stockage d'énergie de la présente divulgation peut en outre être configuré pour stocker ladite autre énergie, par exemple électrique. Tout système de génération et/ou stockage d'énergie de la présente divulgation peut par exemple comprendre une ou plusieurs batteries couplée(s) au mécanisme configuré pour transformer une énergie cinétique en une autre énergie. Alternativement, dans le cas d'un volant d'inertie, le système peut stocker de l'énergie inertielle, pour pouvoir la distribuer ultérieurement, par exemple sous forme d'énergie cinétique ensuite convertie en énergie électrique.

Selon une première configuration, pour tout système de génération et/ou stockage d'énergie de la présente divulgation comprenant deux parties mobiles l'une par rapport à l'autre peut, d'un côté l'une des deux parties mobiles peut être connectée (e.g., de manière fixe, c'est-à-dire sans ou sensiblement sans mouvement relative possible) à une extrémité d'amarre donnée, et de l'autre côté l'autre partie mobile peut être connectée (e.g., de manière fixe) à la plateforme flottante si l'extrémité d'amarre donnée est fixée à la plateforme, ou bien à l'objet séparé de la plateforme si l'extrémité d'amarre donnée est fixée à l'objet séparé de la plateforme. Selon une deuxième configuration, l'une des deux parties mobiles est connectée (e.g., de manière fixe) à une extrémité intérieure d'une première section d'amarre et l'autre partie mobile est connectée (e.g., de manière fixe) à une extrémité intérieure correspondante d'amarre, c'est-à-dire à l'extrémité intérieure d'une deuxième section d'amarre reliée à la première section d'amarre par l'intermédiaire des deux parties mobiles. Ainsi, le système de génération et/ou stockage d'énergie peut être arrangé à une extrémité de l'amarre respective reliant la plateforme flottante et l'objet séparé (première configuration), ou en une position intermédiaire (deuxième configuration).

Dans les deux configurations, l'amarre relie la plateforme flottante à l'objet séparé de la plateforme flottante par l'intermédiaire des deux parties mobiles du système de génération et/ou stockage d'énergie, une première partie mobile étant liée solidairement à la plateforme flottante et la deuxième partie mobile étant liée solidairement à l'objet séparé de la plateforme flottante. Ainsi, des courants marins tendant à écarter la plateforme flottante et l'objet séparé de la plateforme flottante mettent sous tension l'amarre, et cette tension mécanique se traduit par un mouvement relatif des deux parties mobiles et une génération d'énergie.

Différents exemples de l'installation de production d'énergie en mer proposée sont maintenant discutés en références aux figures.

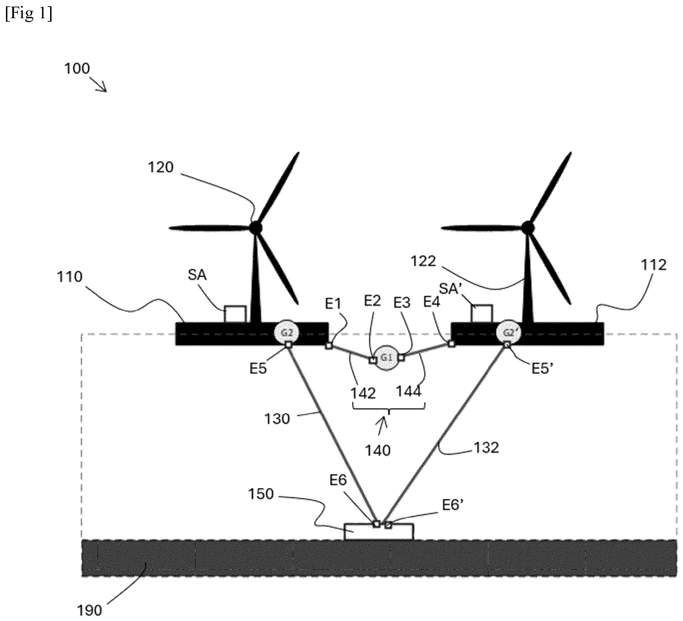

La figure 1 montre une installation de production d'énergie en mer 100 selon un premier exemple comprenant une première plateforme flottante 110 et une deuxième plateforme flottante 112. L'installation 100 comprend en outre une première éolienne 120 qui est montée sur la première plateforme flottante 110, et une deuxième éolienne 122 qui est montée sur la deuxième plateforme flottante 112.

Les deux plateformes 110 et 112 sont séparées et peuvent être intégrées à un même parc éolien comprenant une pluralité de plateformes.

L'installation 100 peut comprendre une amarre partagée 140 qui relie les deux plateformes 110 et 112. L'amarre partagée 140 permet de limiter la séparation entre les plateformes 110 et 112. L'amarre partagée 140 comprend deux extrémités E1 et E4 fixées chacune à une plateforme respective 110 ou 112.

De manière additionnelle ou alternative, l'installation 100 peut comprendre une ancre de fixation 150 au fond marin 190, ainsi qu'une première amarre d'ancrage 130 reliant la plateforme 110 à l'ancre de fixation 150, et optionnellement une deuxième amarre d'ancrage 132 reliant la plateforme 112 à l'ancre de fixation 150. La première amarre d'ancrage 130 (respectivement deuxième amarre d'ancrage 132) comprend deux extrémités E5 (respectivement E5') et E6 (respectivement E6') fixées, l'une E5 à la plateforme 110 (respectivement E5' à la plateforme 112) et l'autre E6, E6' à l'ancre de fixation 150. L'ancre de fixation 150 et les amarres d'ancrage permettent de limiter la dérive des plateformes 110 et 112. L'utilisation d'une seule ancre 150 permet de mutualiser l'ancrage et ainsi réduire le matériel consommé. Dans une variante, l'installation pourrait comprendre une ancre de fixation distincte par plateforme 110, 112 et/ou une pluralité d'ancres de fixation par plateforme. Selon un mode de réalisation non représenté, chaque plateforme 110, 112 est une plateforme semi-submersible connectée par au moins trois amarres d'ancrage 130, 132, chaque amarre 130, 132 étant connectée à une ancre de fixation 150 distincte ou commune. Selon un autre mode de réalisation non représenté, chaque plateforme 110, 112 est une plateforme à lignes tendues (en anglais : TLP = tension leg platform). Dans ce cas, chaque plateforme 110, 112 comprend au moins trois amarres d'ancrage 130, 132 qui sont chacune connectées tendues à une ancre de fixation 150 distincte.

Ainsi, l'installation 100 peut comprendre non seulement une plateforme 110, une éolienne 120, et une amarre 130, mais encore une plateforme supplémentaire 112, une éolienne supplémentaire 122, et une amarre supplémentaire 132, et également une amarre additionnelle 140 reliant la plateforme 110 et la plateforme supplémentaire 112.

Les amarres 130, 132, 140 et l'ancre de fixation 150 peuvent être implémentées selon toute technique d'amarrage et d'ancrage connue, par exemple tel que décrit dans l'article de Hall, Matthew, et al., « Design and analysis of a ten-turbine floating wind farm with shared mooring lines. », Journal of Physics: Conference Series. Vol. 2362. No. 1. IOP Publishing, 2022.). L'amarre partagée 140 peut par exemple être implémentée selon la description de l'article de Lozon, Ericka, and Matthew Hall., « Coupled loads analysis of a novel shared-mooringfloating wind farm. », Applied Energy 332 (2023): 120513.

L'installation 100 comprend en outre plusieurs systèmes de génération et/ou stockage d'énergie G1, G2, G2' à partir d'une tension mécanique subie par l'amarre. Ce type d'amarres et notamment les amarres 130, 132, 140 subissent cycliquement une tension mécanique selon les conditions de vent, de courant et de houle. L'énergie générée par une telle tension mécanique peut être récupérée, et ainsi servir à générer et/ou stocker de l'énergie redistribuable.

Ainsi, l'installation peut comprendre le système de génération et/ou stockage d'énergie G1 qui récupère de l'énergie à partir d'une tension mécanique subie par l'amarre 140. Tel qu'illustré sur la figure, le système G1 est arrangé en une position intermédiaire de l'amarre 140. L'amarre 140 comprend ainsi une première section d'amarre 142 et une deuxième section d'amarre 144. La première section d'amarre 142 comprend une première extrémité E1 (extrémité « d'amarre ») fixée à la plateforme 110 et une deuxième extrémité E2 (extrémité « intérieure ») fixée au système G1. La deuxième section d'amarre 144 comprend de même une première extrémité E3 (extrémité « intérieure ») fixée à la plateforme 112 et une deuxième extrémité E4 (extrémité « d'amarre ») fixée au système G1. Le système G1 peut comprendre deux parties mobiles l'une par rapport à l'autre, l'une deux parties mobiles étant fixée à l'extrémité E2 et l'autre partie mobile étant fixée à l'extrémité E3. Le système G1 pourrait alternativement être fixé à l'une des plateformes 110 ou 112 et à une extrémité correspondante de l'amarre 140.

De manière additionnelle ou alternative, l'installation 100 peut comprendre le système de génération et/ou stockage d'énergie G2 qui récupère de l'énergie à partir d'une tension mécanique subie par l'amarre 130. Tel qu'illustré sur la figure, le système G2 est fixé à la plateforme 110 ainsi qu'à une extrémité E5 de l'amarre 130, une autre extrémité E6 de l'amarre 130 étant fixée à l'ancre 150. Le système G2 peut comprendre deux parties mobiles l'une par rapport à l'autre, l'une des deux parties mobiles étant fixée à l'extrémité E5 et l'autre partie mobile étant fixée à la plateforme 110. Le système G2 pourrait alternativement être fixé à l'ancre 150, ou encore être arrangé en une position intermédiaire de l'amarre 130.

De manière additionnelle ou alternative, l'installation 100 peut comprendre le système de génération et/ou stockage d'énergie G2' qui récupère de l'énergie à partir d'une tension mécanique subie par l'amarre 132. Tel qu'illustré sur la figure, le système G2' est fixé à la plateforme 112 ainsi qu'à une extrémité E5' de l'amarre 132, une autre extrémité E6' de l'amarre 132 étant fixée à l'ancre 150. Le système G2' peut comprendre deux parties mobiles l'une par rapport à l'autre, l'une deux parties mobiles étant fixée à l'extrémité E5' et l'autre partie mobile étant fixée à la plateforme 112. Le système G2 pourrait alternativement être fixé à l'ancre 150, ou encore être arrangé en une position intermédiaire de l'amarre 132.

Ainsi, l'installation 100 peut comprendre non seulement un système de génération et/ou stockage d'énergie G2, mais encore un système supplémentaire de génération et/ou stockage d'énergie G2', et également un système additionnel de génération et/ou stockage d'énergie G1.

Le système G1, le système G2, et/ou le système G2' peuvent comprendre (chacun) un convertisseur d'énergie cinétique en énergie électrique, par exemple un générateur électrique tournant (rotatif) ou un générateur électrique à mouvement linéaire (de translation), optionnellement couplé à au moins une batterie, et/ou un volant d'inertie. Le système G1, le système G2, et/ou le système G2' peut ainsi (chacun) générer de l'énergie, par exemple électrique, et distribuer ou stocker (dans une ou plusieurs batteries) cette énergie électrique pour pouvoir la redistribuer ultérieurement. Alternativement, le système G1, le système G2, et/ou le système G2' peut (chacun) stocker de l'énergie inertielle, pour pouvoir la distribuer ultérieurement, par exemple sous forme d'énergie cinétique ensuite convertie en énergie électrique.

L'installation 100 peut comprendre un câblage électrique (non représenté) permettant ces distributions d'énergie électrique. L'installation 100 peut en particulier comprendre un ou plusieurs systèmes auxiliaires SA, SA' adaptés chacun à être alimentés en énergie par un ou plusieurs des systèmes G1, G2 et G2'. Chaque système auxiliaire SA, SA' peut comprendre optionnellement un système d'alarme, un système de signalisation, et/ou un système de contrôle et d'acquisition de données.

L'installation 100 telle qu'illustrée sur la figure 1 permet de récupérer de l'énergie cinétique générée par un éventuel mouvement d'éloignement de chacune des plateformes 110 et 112 relativement à l'ancre 150, ainsi que de l'énergie cinétique générée par un éventuel mouvement d'éloignement relatif entre les deux plateformes 110 et 112.

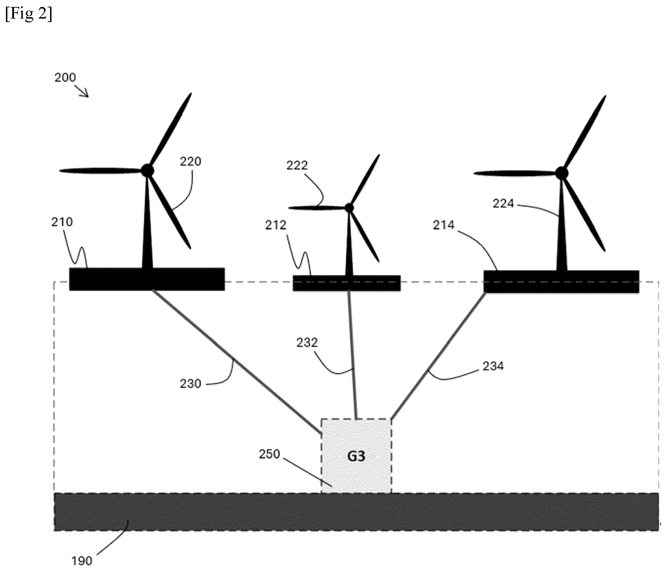

La figure 2 montre une installation de production d'énergie en mer 200 selon un deuxième exemple comprenant trois plateformes flottantes 210, 212, et 214, une éolienne respective 220, 222 et 224 montée sur chaque plateforme et une amarre d'ancrage respective 230, 232, et 234 reliant chaque plateforme à un système de génération et/ou stockage d'énergie G3 ayant également la fonction d'ancre de fixation au fond marin 190.

Dans cet exemple, le système G3 peut être particulièrement massif, et par exemple comprendre au moins un aimant présentant une masse supérieure à 500 kilogrammes ou 1 tonne, fixé sur un support par exemple gravitaire, par exemple en béton d'une masse supérieure à 1000 tonnes, éventuellement lesté avec un ballast. Un tel système de génération et/ou stockage d'énergie peut ainsi, tout en présentant une masse suffisante pour servir d'ancre de fixation, récupérer une quantité importante d'énergie, provenant de valeurs de tension mécaniques particulièrement élevées subies par un nombre d'amarres qui peut être élevé (e.g., strictement supérieur à 2 tel qu'illustré).

Dans cet exemple, le système G3 peut être de préférence comprendre un générateur électrique tournant couplé à une ou plusieurs batteries. Le système G3 peut en outre comprendre un mécanisme à cliquet, ce qui permet de n'autoriser la rotation que dans une seule direction. Ainsi, malgré la présence de plus de deux plateformes reliées au système G3 par une amarre respective et qui peuvent à un même moment avoir tendance à faire tourner une partie mobile du système G3 par rapport à une autre partie mobile dans des directions différentes, la rotation ne se fait que dans un seul sens. En d'autres termes, le mécanisme à cliquet permet de gérer les conflits éventuels de sens de rotation liés à des tensions opposées subies par les différentes amarres 230, 232, et 234.

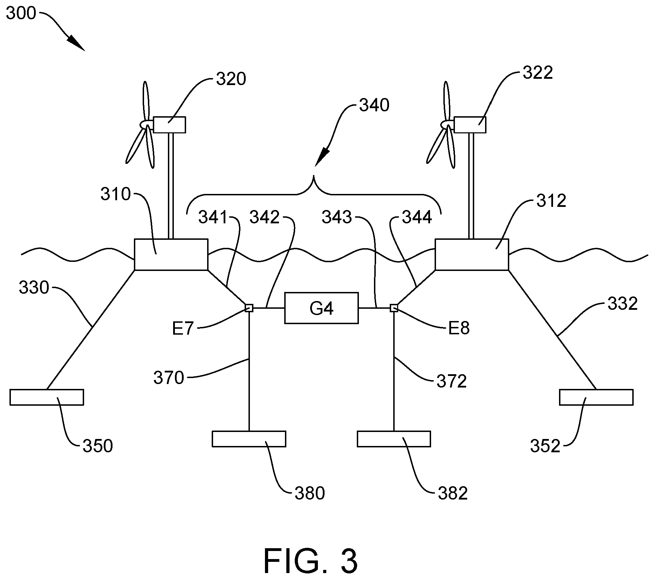

La figure 3 montre une installation de production d'énergie en mer 300 selon un troisième exemple comprenant deux plateformes flottantes 310 et 312, une éolienne respective 320 et 322 montée sur chaque plateforme et une amarre d'ancrage respective 330 et 332, et 334 reliant chaque plateforme à une ancre de fixation respective 350 et 352.

L'installation 300 comprend en outre une amarre additionnelle 340 reliant la plateforme 310 et la plateforme supplémentaire 312, et un système de génération et/ou stockage d'énergie G4, par exemple électrique, à partir d'une tension mécanique subie par l'amarre additionnelle 340. Comme pour le système G1 tel qu'illustré à la figure 1, le système G4 est arrangé en position intermédiaire de l'amarre additionnelle 340.

L'installation 300 comprend en outre des amarres de fixation 370 et 372 reliant chacune, à une ancre additionnelle de fixation respective 380, 382, l'amarre additionnelle 340. Les amarres de fixation 370 et 372 peuvent être connectées de part et d'autre du système G4. Ainsi, l'amarre 340 comprend une première section 341 fixée en une extrémité à la plateforme et en une autre extrémité à un nœud E7, une deuxième section 342 fixée en une extrémité au nœud E7 et en une autre extrémité au système G4 (par exemple à une première partie mobile du système G4), une troisième section 343 fixée en une extrémité au système G4 (par exemple à une deuxième partie mobile du système G4) et en une autre extrémité à un nœud E8, et une quatrième section 344 fixée en une extrémité au nœud E8 et en une autre extrémité à la plateforme 312. Les amarres de fixation 370 et 372 sont alors fixées chacune en une extrémité respective aux nœuds E7 et E8.

L'installation 300 permet, grâce aux amarres de fixation 370 et 372 et aux ancres de fixation 380 et 382 correspondantes, de modérer la tension subie par l'amarre 340, ce qui permet de préserver la durée de vie du système G4 en particulier s'il s'agit d'un système à générateur linéaire.

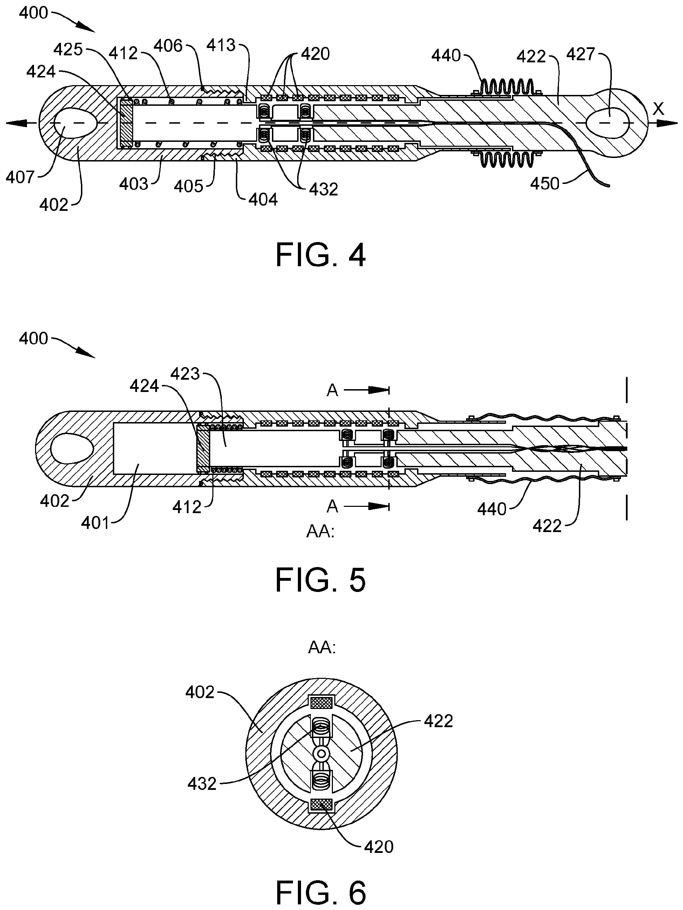

Les figures 4 à 6 illustrent un exemple de système de génération et/ou stockage d'énergie 400. La figure 4 montre selon une coupe longitudinale le système 400 dans un état actionnable. La figure 5 montre selon une coupe longitudinale le système 400 dans un état actionné et à bout de course. La figure 6 montre une coupe transversale selon l'axe AA de la figure 5.

Le système de génération et/ou stockage d'énergie 400 est un générateur électrique à mouvement linéaire qui comprend deux parties mobiles 402 et 422 l'une par rapport à l'autre. Les parties mobiles 402 et 422 comprennent chacune un évidement 407, 427 permettant la connexion (non représentée) soit chacun à une section respective d'une amarre, soit l'un à une amarre et l'autre à un objet (par exemple une plateforme flottante ou une ancre de fixation). Une tension mécanique subie par l'amarre impartit un mouvement de translation aux deux parties mobiles 402 et 422 l'une relativement à l'autre le long d'un axe longitudinal X.

La figure 4 montre l'état du système 400 lorsque l'amarre ne subit pas de tension mécanique. La figure 5 montre l'état du système 400 après que l'amarre a subi une tension mécanique. Lorsque l'amarre subit une tension mécanique, le système 400 s'étire le long de l'axe X et les parties mobiles 402 et 422 s'éloignent ainsi l'une de l'autre le long de l'axe X. La partie mobile 422 peut effectuer des mouvements de translation à l'intérieur d'un évidement longitudinal 401 réalisé dans la partie mobile 402.

Ce mouvement linéaire entraîne une translation relative de bobines 432 que comprend la partie mobile 422 et faites d'un matériau conducteur d'électricité. La partie mobile 402 comprend des aimants permanents 420 arrangés de part et d'autre de l'évidement 401. Le mouvement de translation de la partie mobile 422 à l'intérieur de l'évidement longitudinal 401 réalisé dans la partie mobile 402 génère donc de l'électricité. Le système de génération et/ou stockage d'énergie 400 peut comprendre un câblage 450 connecté aux bobines 432 pour distribuer cette électricité vers une ou plusieurs batteries et/ou un ou plusieurs systèmes auxiliaires (non représentés). Dans une variante, la partie mobile « mâle » (la partie mobile 422 dans l'exemple) pourrait comprendre des aimants, et la partie mobile « femelle » (la partie mobile 402 dans l'exemple) pourrait comprendre des bobines. Ainsi, dans une telle variante, les aimants seraient en translation avec des bobines de part et d'autres. Encore d'autres variantes permettraient de même de générer de l'électricité par un mouvement linéaire d'une partie mobile par rapport à une autre.

La partie mobile 422 peut comprendre une plaque 424 radiale glissant dans l'évidement 401 le long d'une paroi interne longitudinale de la partie mobile 402. La plaque 424 peut comprendre des roulements ou patins 425, ce qui facilite le glissement. Alternativement ou en complément, les roulements ou patins sont complétés par au moins un palier annulaire, de préférence en polymère tel qu'un polyamide ou un polytétrafluoroéthylène (PTFE), et éventuellement par un joint annulaire en élastomère idéalement étanche aux gaz et/ou aux liquides. La plaque 424 peut présenter un diamètre supérieur à une partie terminale 423 de la partie mobile 422. Ainsi, un ressort hélicoïdal de compression 412 peut être arrangé autour de la partie terminale 423 et prendre appui en une extrémité sur une portion de la plaque 424 qui dépasse de la partie terminale 423. Le ressort 412 peut prendre appui en son autre extrémité sur une butée radiale 413 de la partie mobile 402. Dans une variante, un ressort de traction pourrait être fixé en une extrémité à la plaque 424 et en son autre extrémité sur une paroi interne radiale de la partie mobile 402 (dans le prolongement de la partie terminale 423 et vers **l'évidement** 407).

Lorsque l'amarre subit une tension mécanique et que le système 400 tend à s'étirer le long de l'axe X, le ressort 412 est compressé. Le système 400 passe de l'état de la figure 4 à l'état de la figure 5. Lorsque l'amarre ne subit plus la tension mécanique, le ressort 412 s'étire afin de retourner à son état de repos, ce qui tend à remettre le système 400 dans l'état de la figure 4. Non seulement cela permet par effet d'une nouvelle translation des bobines 432 en regard des aimants 420 de générer de nouveau de l'électricité, mais encore cela assure qu'une tension mécanique subie ultérieurement par l'amarre produira le même résultat de va-et-vient des parties mobiles 402 et 422 et de génération électrique.

La partie mobile 402 peut comprendre une première portion 403 assemblable à une deuxième portion 404 par vissage, les portions 403 et 404 comprenant un filetage 405 pour l'une et un taraudage 405 pour l'autre. Cela facilite la disposition du ressort et de la plaque 424. La partie mobile 402 peut comprendre un joint annulaire 406 à l'interface entre les portions 403 et 404. Cela assure l'étanchéité du système 400 et préserve les aimants 420 et les bobines 432.

Le système 400 peut comprendre un soufflet 440 en matériau flexible, par exemple en caoutchouc, fixé de manière étanche à la partie mobile 402 en une extrémité, et à la partie mobile 422 en son autre extrémité. Le soufflet 440 s'étend ou se rétracte selon que les parties mobiles 402 et 422 s'éloignent ou se rapprochent l'une de l'autre. Le soufflet 440 assure ainsi l'étanchéité du système 400 et préserve les aimants 420 et les bobines 432.

## Revendications

1. Installation de production d'énergie en mer (100, 200, 300) comprenant :
- une plateforme flottante (110, 210, 310),
- un système de production d'énergie monté sur la plateforme et comprenant préférentiellement au moins une éolienne (120, 220, 320),
- une amarre (130, 140, 230, 340) reliée à la plateforme, et
- un système de génération et/ou stockage d'énergie (G1, G2, G3, G4), par exemple électrique, à partir d'une tension mécanique subie par l'amarre.

2. Installation selon la revendication 1, comprenant en outre une ancre de fixation (150, 250) au fond marin (190), l'amarre (130, 230) reliant la plateforme (110, 210) et l'ancre de fixation.

3. Installation selon la revendication 1, comprenant en outre une plateforme flottante supplémentaire (112, 312) et un système supplémentaire de production d'énergie (122, 322) monté sur la plateforme supplémentaire et comprenant préférentiellement au moins une éolienne, l'amarre (140, 340) reliant la plateforme et la plateforme supplémentaire.

4. Installation selon la revendication 2, comprenant en outre une plateforme flottante supplémentaire (112), un système supplémentaire de production d'énergie (122) monté sur la plateforme supplémentaire et comprenant préférentiellement au moins une éolienne, et une amarre additionnelle (140), l'amarre additionnelle reliant la plateforme et la plateforme supplémentaire.

5. Installation selon la revendication 4, comprenant en outre :
un système additionnel de génération et/ou stockage d'énergie (G1), par exemple électrique, le système additionnel de génération et/ou stockage d'énergie étant configuré pour générer et/ou stocker l'énergie à partir d'une tension mécanique subie par l'amarre additionnelle (140), et/ou
une amarre supplémentaire (132) reliant la plateforme supplémentaire (112) à l'ancre de fixation (150), l'installation (100) comprenant de préférence en outre un système supplémentaire de génération et/ou stockage d'énergie (G2'), par exemple électrique, à partir d'une tension mécanique subie par l'amarre supplémentaire (132).

6. Installation selon la revendication 3 ou selon la revendication 4 ou 5, comprenant en outre une ou plusieurs amarres de fixation (370, 372) reliant chacune, à une ancre additionnelle de fixation (380, 382) au fond marin respective, l'amarre ou l'amarre additionnelle (340) reliant la plateforme (310) et la plateforme supplémentaire (312), de préférence deux amarres de fixation (370, 372) connectées de part et d'autre du système ou système additionnel de génération et/ou stockage d'énergie (G4).

7. Installation selon l'une quelconque des revendications 1 à 6, dans laquelle le ou au moins un système de génération et/ou stockage d'énergie comprend :
- un convertisseur d'énergie cinétique en énergie électrique, par exemple un générateur électrique tournant ou un générateur électrique à mouvement linéaire (400), optionnellement couplé à au moins une batterie, et/ou
- un volant d'inertie.

8. Installation selon l'une quelconque des revendications 1 à 7, dans laquelle le ou au moins un système de génération et/ou stockage d'énergie comprend deux parties mobiles (402, 408) l'une par rapport à l'autre, et dans laquelle l'une des deux parties mobiles est connectée à une extrémité d'amarre (E1, E4), ou l'une des deux parties mobiles est connectée à une extrémité intérieure (E2, E3) de section d'amarre (142, 144) et l'autre partie mobile est connectée à une extrémité intérieure correspondante d'amarre.

9. Installation selon l'une quelconque des revendications 1 à 8, dans lequel un rapport entre une puissance de sortie du système de génération et/ou stockage d'énergie et une puissance de sortie du système de production d'énergie est inférieur à 0.05.

10. Installation selon l'une quelconque des revendications 1 à 9, comprenant en outre un ou plusieurs systèmes auxiliaires (SA, SA') adaptés à être alimentés en énergie par le système de génération et/ou stockage d'énergie, les un ou plusieurs systèmes auxiliaires comprenant optionnellement un système d'alarme, un système de signalisation, et/ou un système de contrôle et d'acquisition de données.

11. Procédé de stabilisation dynamique d'une installation selon l'une quelconque des revendications 1 à 10, dans lequel le système de génération et/ou stockage d'énergie ajuste la tension ou la variation de tension de l'amarre à laquelle il est connecté.

12. Procédé de stabilisation dynamique d'une installation selon l'une quelconque des revendications 1 à 10, dans lequel le système de génération et/ou stockage d'énergie
a. ajuste la tension ou la variation de tension de l'amarre à laquelle il est connecté lorsque le système de production d'énergie est en fonctionnement, ou
b. n'ajuste pas la tension ou variation de tension de l'amarre à laquelle il est connecté lorsque le système de production d'énergie est à l'arrêt.
